# EUROPEAN PATENT APPLICATION

(11) **EP 4 632 224 A1**
(43) Date of publication of application: **15.10.2025**
(21) Application number: 24169127.8
(22) Date of filing: 09.04.2024
(51) Int. Cl.: F03D 80/80

(54) **WIND TURBINE AND MODULE AND METHOD FOR CONSTRUCTING A WIND TURBINE**

(71) Applicant: Siemens Gamesa Renewable Energy A/S, 7330 Brande (DK)
(72) Inventor: Jensen, Morten Lauridsen, 8200 Aarhus N (DK); Nielsen, Kim Gade, 7400 Herning (DK)
(74) Representative: SGRE-Association

(57) **Abstract**

Wind turbine comprising a generator (2) and a first and a second electric power converter (3, 4) for converting power provided by the generator (2), wherein the wind turbine (1) comprises a junction box (8), wherein the first electric power converter (3) is electrically connected to the junction box (8) via at least one first conductor (9-11), wherein the second electric power converter (4) is electrically connected to the junction box (8) via at least one second conductor (12-14), wherein the junction box (8) electrically connects each first conductor (9-11) to a respective one of the second conductors (12-14) and a respective third conductor (15-17), wherein at least a section of the third conductor (15-17) is arranged within a tower (18) of the wind turbine (1).

## Description

The invention concerns a wind turbine comprising a generator and a first and a second electric power converter for converting power provided by the generator. Additionally, the invention concerns a module and a method for constructing a wind turbine.

In larger wind turbines, especially in offshore wind turbines, but also in onshore wind turbines, it can be advantageous to use multiple electric power converters, e.g., multiple transformers, to condition the power provided by the generator for a power recipient, e.g., for an external sub-station. the use of separate power cables for each of the electric power generators will however add a non-negligible cost and weight to the wind turbine, especially since each converter typically needs to be connected by three separate conductors to transport current for three phases of the AC-current.

The invention is therefore based on the problem of lowering the weight, complexity, and cost of a wind turbine.

The problem is solved by a wind turbine comprising a generator and a first and a second electric power converter for converting power provided by the generator, wherein the wind turbine comprises a junction box, wherein the first electric power converter is electrically connected to the junction box via at least one first conductor, wherein the second electric power converter is electrically connected to the junction box via at least one second conductor, wherein the junction box electrically connects each first conductor to a respective one of the second conductors and a respective third conductor, wherein at least a section of the third conductor is arranged within a tower of the wind turbine.

By using the junction box to connect the respective first and second conductor to the single associated third conductor, the transport of the conditioned power beyond the junction box can be achieved by a single conductor per phase. Therefore, even when multiple electrical power converters are used, the same number of conductors can be used for conducting the power beyond the junction box, e.g., to a sub-station outside of the wind turbine, as in the case, when only a single electrical power converter would be used. Therefore, a lower amount of conductors or cables can be used due to the invention, therefore lowering the complexity and cost of the wind turbine and the weight that needs to be supported by the tower.

This approach can obviously be extended to the use of more than two electrical power converters. In this case, a respective conductor from each of the generators could be connected to the associated third conductor by the junction box.

The first, second and third conductor can especially be designed to carry high voltage and/or high power, e.g., to transport power generated by the generator to an outside facility.

The third conductor can be directly used to connect the junction box to a power receiver spaced horizontally apart from the tower, e.g., to a sub-station of an onshore or offshore wind park. Alternatively, the third conductor can be connected to a connector arranged at a position in the tower below the junction box to, e.g., allow for an easy connection to a sea or overland cable. For a direct connection of a sea cable to the junction box it can, e.g., be pulled upward within the tower after landing the cable and the conductors of the cable can then be connected to the junction box.

The respective first and/or second conductor can be connected to the respective third conductor and a respective surge protection device formed as part of the junction box. This can improve the ease of constructing and/or servicing the wind turbine, since no separate connection to a surge protection device is necessary.

Compared to the use of a separate surge protection device for each of the first and second conductors, an integration of such a surge protection device in the junction box can be simpler and more cost-effective, since the use of a single surge protection device for each phase and therefore for each third conductor is sufficient.

Alternatively, it would, e.g., be possible to use a surge protection device that is integrated into the switch gear.

The respective first and/or second and/or third conductor or a respective cable comprising all the first or second or third conductors can comprise a respective connector that is connected to a respective connector formed by the junction box. The connection can be formed by plugging and/or screwing the connectors together. During the development of the invention, T-connectors where used, but any other connection, e.g., a Plug-and-Socket connection, could be used. By using such connectors on the conductors or on cables comprising multiple conductors, the construction of the wind turbine and especially parts of the construction that need to be performed on-site can be further sped up.

The first electric power converter can be connected to the junction box via multiple first conductors that are provided within a single first cable. Alternatively or additionally, the second electric power converter can be connected to the junction box via multiple second conductors that are provided within a single second cable.

Additionally or alternatively, multiple third conductors can be connected to a respective first and second conductor via the junction box, wherein the multiple third conductors are provided within a single third cable.

The combination of multiple first and/or second and/or third conductors into a single respective cable can further simplify and speed up the installation process. In some cases, it can however be advantageous to implement some of the first, second and/or third conductors using individual cables, e.g., when connection points for the individual first and/or second conductors on the respective electric power converter are spaced apart, such that a common connector for, e.g., different phases, is not advantageous or in general when more flexible wiring is desirable.

Preferably three respective conductors are used, especially when a three-phase current is provided by the electronic power converters.

The labeling of the second and third cable is only used to identify the cable itself and does not indicate, that the first cable needs to be present for the second cable to be present or that the first and/or second cable need to be present for the third cable to be present.

The tower can be formed from at least two vertically stacked tower segments, wherein the junction box is arranged in the uppermost one of the tower segments. Using a junction box located in the uppermost tower segment allows for an extensive preassembly of components that are to be mounted on the tower as discussed below, therefore lowering the required on-site installation work. At the same time, such a placement allows for an easy connection of the third conductors or the third cable one-site, since the conductors or cable can, e.g., be pulled up within the tower and then connected to the junction box in the uppermost segment.

The different tower segments can, e.g., be connected by welding, a bolted connection or by a slip joint. The uppermost tower segment can especially be a tower adaptor, that is part of a module that is mounted on top of the other tower segment or segments and that can, e.g., already comprise the bedframe and/or the nacelle an/or the generator and/or the electric power converters. The electric power converters can already be connected to the junction box prior to the installation of the module on the tower or on the lower segment or segments of the tower. The use of such a preassembled module reduces the required on-site installation work. This can notably lower the time requirement and cost for installation, since complex and/or time-consuming installation processes can be performed off-site, e.g., in a production facility or, e.g., on land when constructing an offshore wind turbine.

The junction box can alternatively be arranged on or in a bedframe that is mounted to the tower and that supports the electric power converter. A bedframe is a support frame that is connected to the tower and supports, e.g., the converters and preferably the generator and/or at least one bearing for the rotor of the wind turbine.

In a further alternative, the junction box can be arranged in a nacelle of the wind turbine that is housing the first and/or second electric power converter.

All three discussed options for the placement of the junction box allow for a modular construction, wherein components mounted to the nacelle and/or the bedframe and/or the uppermost section of the tower, which can also be called tower adaptor, can be preinstalled prior to mounting the resulting module to the tower or to the lower section or sections of the tower. Preferably the respective first and second conductor or cable can be connected to the respective electrical power converter and the junction box prior to the installation of the module.

The installation of the junction box in the uppermost section of the tower is often preferable, since the third conductor or conductors or a cable comprising those conductors can be easily connected to the junction box in this case. The other options would require the third conductor or conductors or this cable to be routed into and/or through the bedframe and/or the nacelle. These options can however be advantageous, if no tower adaptor is used or if the amount of free installation space in the tower adaptor is limited.

The wind turbine can comprise the bedframe or a bedframe, wherein the first conductor or the cable or a cable comprising the first conductors and/or the second conductor or the cable or a cable comprising the second conductors passes through the bottom of the bedframe and/or through a sidewall of the bedframe that is arranged at an angle to the bottom of the bedframe. To pass through the sidewall, the respective conductor or cable can, e.g., passed through the bedframe door. The bottom of the bedframe is directed downwards or in general towards the tower and/or is in contact with the tower or the tower adaptor. It was found, that routing the respective conductor or cable through the bedframe can, e.g., be advantageous, when the junction box is located in the uppermost tower segment or the tower adaptor and when the respective electric power converter is located outside of the interior of the bedframe, e.g., in a nacelle.

The first and a second electric power converter can be or comprise a respective transformer, wherein the first and second conductor are electrically connected to the respective transformer. It was found that using the transformer as the final step of the electric power conversion can be advantageous. The respective electric power converter can, e.g., comprise an active converter that feeds the transformer.

Besides the wind turbine according to the present invention, the invention also concerns a module for constructing a wind turbine, comprising a generator and a first and a second electric power converter for converting power provided by the generator, wherein the module is designed to be mounted on top of a tower or on top of a lower section of a tower to form the wind turbine, wherein the module comprises a junction box, wherein the first electric power converter is electrically connected to the junction box via at least one first conductor, wherein the second electric power converter is electrically connected to the junction box via at least one second conductor, wherein the junction box electrically connects each first conductor to a respective one of the second conductors and to a respective electrical connection of the junction box.

The module can be prewired and the high voltage connections can then be formed simply by connecting the at least one third conductor or a cable comprising the third conductors to a respective electrical connection of the junction box. This was already discussed above with respect to the wind turbine according to the present invention.

The module can especially be used to construct a wind turbine according to the present invention and/or can be used in the inventive method discussed below. Any features discussed with respect to the wind turbine according to the present invention and/or the inventive method discussed below can be transferred to the module according to the present invention to achieve the discussed advantages and vice versa.

Preferably the module comprises a tower adaptor that is designed to form the uppermost segment of the tower when mounted on top of the lower section of the tower, wherein the junction box is mounted within the tower adaptor. The advantages of such an arrangement where already discussed above.

Additionally, the invention concerns a method for constructing a wind turbine, comprising the steps of:
- providing a module according to the present invention and a tower or a lower section of a tower,
- mounting the module on top of the tower or the lower section of the tower,
- connecting a respective third conductor to the respective electrical connection of the junction box.

Details and advantages of such a method for constructing a wind turbine where already discussed above with respect to the wind turbine according to the present invention. As discussed above, the electrical connection can especially be performed by connecting a cable comprising the third conductors or the at least one individual third conductor to the junction box using a dedicated connector of the cable and the junction box.

Any of the discussed features of the wind turbine and the module according to the present invention can be transferred to the inventive method with the discussed advantages and vice versa.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an exemplary embodiment of the wind turbine according to the present invention,
- Fig. 2: a detailed view of the wiring of wind turbine shown in fig. 1, and
- Fig. 3: a flow chart of an embodiment of the method according to the present invention.

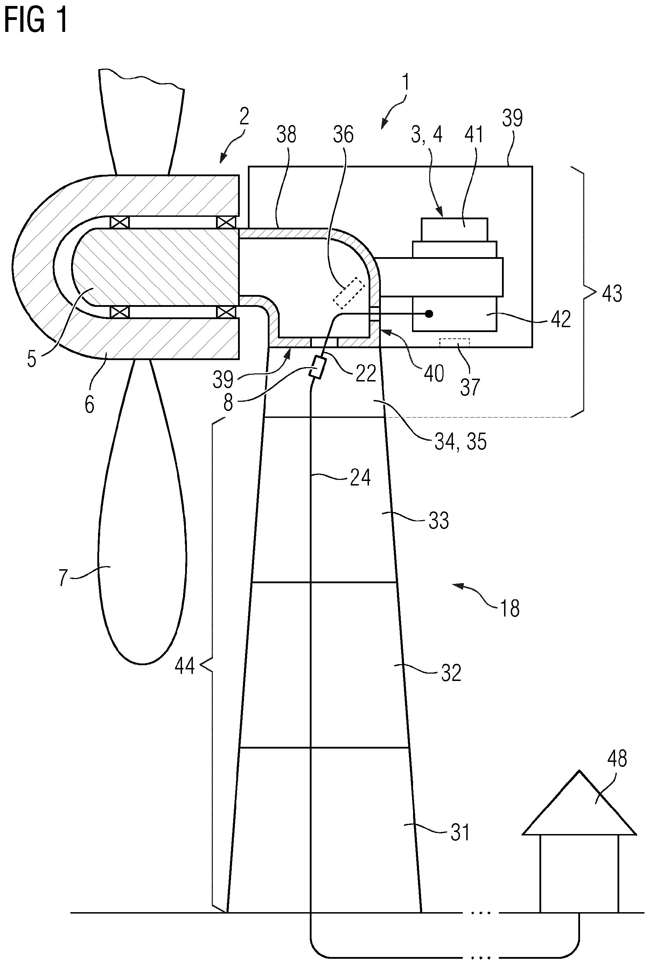

Fig. 1 shows a wind turbine 1 comprising a generator 2 formed by a stator 5 and a rotor 6. The rotor 6 is carrying the turbine blades 7 of the wind turbine 1. When the rotor 6 is rotated, the generator 2 generates electric power that is converted by multiple electric power converters 3, 4 to provide converted power, e.g., to an external sub-station 48. The respective power converters 3, 4 can, e.g., be formed by an active converter 41 followed by a transformer 42.

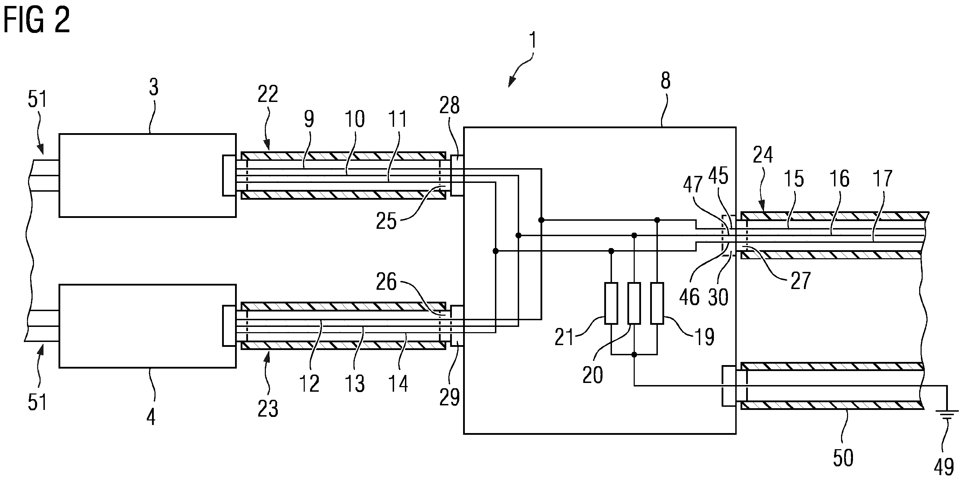

In fig. 1 only one of the electric power converters 3, 4 is visible, since the second electrical power converter 4 is hidden behind the first electrical power generator 3 due to the viewing angle in fig. 1. Both electrical power converters 3, 4 and their wiring are however shown in fig. 2, that will also be considered in the following description.

The connection of the electrical power converters 3, 4 to the generator 2 is only schematically indicated in fig. 2 to by the connections 51. When two electrical power converters 3, 4 are used, the most obvious way to connect them to the sub-station 48 or to some other power recipient would be to directly connect the first and second cable 22, 23 connected to the respective electric power converter 3, 4 directly to the power recipient.

Since the sub-station 48 is located quite far apart from the electric power converter 3, 4, this would however require the use of multiple rather long cables and would therefore notably increase in the cost of installing the wind turbine 1. Additionally, these cables or more specifically the conductors 9 to 14 within these cables 22, 23 would need to be connected to the electrical power converters 3, 4 on-site and therefore would, e.g., needed to be routed through the bedframe 38 and at least part of the nacelle 39, leading to a relatively complex on-site installation.

To avoid these issues, the wind turbine 1 comprises a junction box 8 used to connect each of the first conductors 9-11 within the first cable 22 to a respective one of the second conductors 12-14 in the second cable 23 and to a respective one of the third conductors of 15-17 in a third cable 24 that is then used to transport of the power to the sub-station 48 or some other power recipient. Therefore, less cable is required to connect the wind turbine 1 and the cost and weight can therefore be reduced. As will be discussed in more detail below, the use of such a junction box 8 can also allow for an easier installation of the wind turbine 1.

The use of three conductors 9-17 in each one of the cables 21 to 24 is advantageous, since typically current for three separate phases needs be transported and the combination of the conductors for the different phrases into a single cable can reduce the installation effort. In an alternate embodiment, it would however be possible to use separate conductors for each of the phases for at least one of these connections instead of combining the conductors within a respective single cable, e.g., to allow for more flexible wiring.

In the example, the junction box 8 additionally includes respective surge protection device 19-21, e.g., a respective spark gap, for connecting the respective phase to the ground potential 49 with a low impedance in the case of a voltage surge, e.g., due to a lightning strike or an electrical malfunction. in fig. 2 a separate cable 50 is used for this connection. It would however also be possible to directly use the metal of a metal tower 18 or other metal components for grounding.

To further reduce the effort required for installing the wind turbine, the connection of the respective cable 22 to 24 to the junction box 8 is achieved by connecting a respective connector 25-27 of the respective cable 22-24 to a respective connector 28-30 of the junction box 8.

In the example the junction box 8 is mounted in the uppermost segment 34 of the tower 18 and the first and second cable 22, 23 are routed through the bottom 39 and a side wall 40 of the bedframe 38. This arrangement is especially advantageous, when the uppermost segment 34 is formed by a tower adaptor 35 that is part of a module 43 placed on top of the lower section 44 of the tower 18. The module can in this case, e.g., already comprise the bedframe 38, the tower adaptor 35, the electrical power converters 3, 4, the junction box 8 and the first and second cable 21, 22. Optionally the module 43 can also already comprise the generator 2 or at least the stator 5.

The module can be pre-built off-site, e.g., on land in the case of an off-shore wind turbine 1 and/or in a dedicated production facility. This can notably lower the required time and effort for on-site construction, which can lower the cost and complexity of the construction.

The lower section 44 of the tower can optionally also comprise multiple segments 31-33. The different segments 31 to 34 can be attached to each other, e.g., by welding, by a bolted connection or by using a slip joint.

In alternate embodiments of the wind turbine, the junction box 8 could also be installed within the bedframe 38, e.g., at the position 36, or within the nacelle 39, e.g., at the position 37.

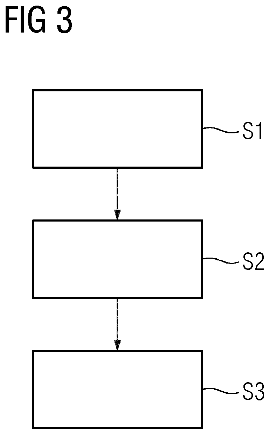

Fig. 3 shows a flow chart of a method for constructing a wind turbine 1. In step S1, the module 43 and the lower section 44 of the tower 18 are provided as discussed above. The module 43 can especially be prebuilt off-site, e.g., in a dedicated production facility, and, e.g., be transported to the construction site in one piece.

In step S2, the module 43 is than mounted on top of the lower section 44 of the tower 18.

In step S3 the electrical connectors 45 to 47 of the junction box 8, that are connected to the respective conductor 9-14 of the first and second cable 22, 23, are then connected to the individual conductors 15 to 17 of the third cable 24, especially by simply connecting the connectors 27, 30 to each other.

The use of the junction box 8 therefore notably simplifies the construction of the wind turbine 1, since most of the wiring can be performed off-site.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Wind turbine comprising a generator (2) and a first and a second electric power converter (3, 4) for converting power provided by the generator (2), **characterized in that** the wind turbine (1) comprises a junction box (8), wherein the first electric power converter (3) is electrically connected to the junction box (8) via at least one first conductor (9-11), wherein the second electric power converter (4) is electrically connected to the junction box (8) via at least one second conductor (12-14), wherein the junction box (8) electrically connects each first conductor (9-11) to a respective one of the second conductors (12-14) and a respective third conductor (15-17), wherein at least a section of the third conductor (15-17) is arranged within a tower (18) of the wind turbine (1).

2. Wind turbine according to claim 1, **characterized in that** the respective first and/or second conductor (9-14) is connected to the respective third conductor (15-17) and a respective surge protection device (19-21) formed as part of the junction box (8).

3. Wind turbine according to one of the preceding claims, **characterized in that** the respective first and/or second and/or third conductor (9-17) or a respective cable (22-24) comprising all the first or second or third conductors (9-17) comprises a respective connector (25-27) that is connected to a respective connector (28-30) formed by the junction box (8).

4. Wind turbine according to one of the preceding claims, **characterized**
- **in that** the first electric power converter (3) is connected to the junction box (8) via multiple first conductors (9-11) that are provided within a single first cable (22) and/or
- **in that** the second electric power converter (4) is connected to the junction box (8) via multiple second conductors (12-14) that are provided within a single second cable (23), and/or
- **in that** multiple third conductors (15-17) are connected to a respective first and second conductor (9-14) via the junction box (8), wherein the multiple third conductors (15-17) are provided within a single third cable (24).

5. Wind turbine according to one of the preceding claims, **characterized in that** the tower (18) is formed from at least two vertically stacked tower segments (31-24), wherein the junction box (8) is arranged in the uppermost one of the tower segments (31-34).

6. Wind turbine according to one of the claims 1 to 4, **characterized in that** the junction box (8) is arranged on or in a bedframe (38) that is mounted to the tower (18) and supports the electric power converter (3).

7. Wind turbine according to one of the claims 1 to 4, **characterized in that** the junction box (8) is arranged in a nacelle (39) of the wind turbine (1) that is housing the first and/or second electric power converter (3, 4).

8. Wind turbine according to one of the preceding claims, **characterized in that** the wind turbine (1) comprises the bedframe (38) or a bedframe (38), wherein the first conductor (9-11) or the cable (22) or a cable (22) comprising the first conductors (9-11) and/or the second conductor (12-14) or the cable (23) or a cable (23) comprising the second conductors (12-14) passes through the bottom (39) of the bedframe (38) and/or through a sidewall (40) of the bedframe (38) that is arranged at an angle to the bottom (39) of the bedframe (38).

9. Wind turbine according to one of the preceding claims, **characterized in that** the first and a second electric power converter (3, 4) are or comprise a respective transformer (42), wherein the first and second conductor (9-14) are electrically connected to the respective transformer (42).

10. Module for constructing a wind turbine (1), comprising a generator (2) and a first and a second electric power converter (3, 4) for converting power provided by the generator (2), wherein the module (43) is designed to be mounted on top of a tower (18) or on top of a lower section (44) of a tower (18) to form the wind turbine (1), **characterized in that** the module (43) comprises a junction box (8), wherein the first electric power converter (3) is electrically connected to the junction box (8) via at least one first conductor (9-11), wherein the second electric power converter (4) is electrically connected to the junction box (8) via at least one second conductor (12-14), wherein the junction box (8) electrically connects each first conductor (9-11) to a respective one of the second conductors (12-14) and to a respective electrical connection (45-47) of the junction box (8).

11. Module according to claim 10, **characterized in that** the module comprises (43) a tower adaptor (35) that is designed to form the uppermost segment (34) of the tower (18) when mounted on top of the lower section (44) of the tower (18), wherein the junction box (8) is mounted within the tower adaptor (35).

12. Method for constructing a wind turbine (1), comprising the steps of:
- providing a module (43) according to one of the claims 8 or 9 and a tower (18) or a lower section (4) of a tower (18),
- mounting the module (43) on top of the tower (18) or the lower section (44) of the tower (18),
- connecting a respective third conductor (15-17) to the respective electrical connection (45-47) of the junction box (8).
